# EUROPEAN PATENT APPLICATION

(11) **EP 4 657 712 A1**
(43) Date of publication of application: **03.12.2025**
(21) Application number: 25170961.4
(22) Date of filing: 16.04.2025
(51) Int. Cl.: H02J 7/35, H02J 7/14

(54) **SOLAR CHARGING SYSTEM FOR WATERCRAFT**

(30) Priority: 28.05.2024 JP 2024086258
(71) Applicant: Yamaha Hatsudoki Kabushiki Kaisha, Iwata-shi, Shizuoka 438-8501 (JP)
(72) Inventor: Miyagi, Yuta, Iwata-shi, Shizuoka 438-8501 (JP)
(74) Representative: Grünecker Patent- und Rechtsanwälte PartG mbB

(57) **Abstract**

The present solar charging system for a watercraft includes a solar panel, a battery, an electric charger, a switching device, and a battery monitoring device. The solar panel is attached to the watercraft. The electric charger is connected to the battery. The switching device is provided as a device discrete from the electric charger. The switching device is connected to the electric charger and the solar panel. The switching device switches between whether or not to electrically charge the battery in accordance with a status of the battery. The battery monitoring device monitors the status of the battery and controls the switching device in accordance with the status of the battery.

## Description

The present invention relates to a solar charging system for a watercraft.

### Background Information

A type of solar charging system for a watercraft has been known that a battery is charged by electric power generated by a solar panel in the watercraft. The battery and the solar panel are connected through an electric charger in, for instance, Japan Utility Model Registration No. JP 3 150 986 U.

In the type of solar charging system described above, the electric charger converts the electric power generated by the solar panel from direct current (DC) to alternate current (AC) and supplies the DC-to-AC converted electric power to the battery so as to electrically charge the battery. In this case, excessive charging or degradation of the battery is concerned. Obviously, there is a type of electric charger with a function of monitoring the status of a battery to prevent excessive charging or degradation of the battery; however, this type of electric charger is expensive. It is an object of the present invention to prevent excessive charging or degradation of a battery at a low cost in a solar charging system for a watercraft.

A solar charging system for a watercraft according to an aspect of the present invention includes a solar panel, a battery, an electric charger, a switching device, and a battery monitoring device. The solar panel is attached to the watercraft. The electric charger is connected to the battery. The switching device is provided as a device discrete from the electric charger. The switching device is connected to the electric charger and the solar panel. The switching device switches between whether or not to electrically charge the battery in accordance with a status of the battery. The battery monitoring device monitors the status of the battery and controls the switching device in accordance with the status of the battery.

According to the present invention, the status of the battery is monitored by the battery monitoring device; then, the switching device is controlled to switch between whether or not to electrically charge the battery in accordance with the status of the battery. Accordingly, excessive charging or degradation of the battery is prevented. Besides, the switching device is provided as a device discrete from the electric charger. Because of this, excessive charging or degradation of the battery can be prevented at a low cost without using an expensive electric charger.

### BRIEF DESCRIPTION OF THE DRAWINGS

FIG. 1 is a perspective view of a watercraft in which a solar charging system according to an embodiment is installed.
FIG. 2 is a diagram showing a configuration of the solar charging system.
FIG. 3 is a diagram showing a configuration of a solar charging system according to another embodiment.

### DETAILED DESCRIPTION OF EMBODIMENTS

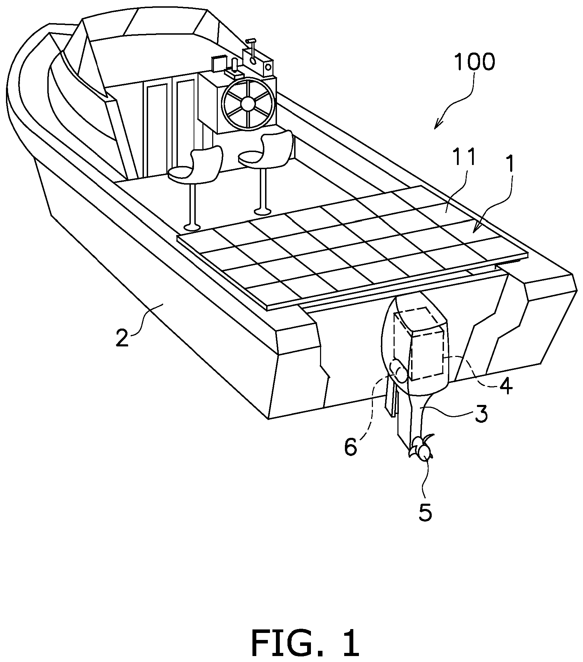

A solar charging system according to an embodiment will be explained with reference to drawings. FIG. 1 is a perspective view of a watercraft 100 in which a solar charging system 1 according to the embodiment is installed. As shown in FIG. 1, the watercraft 100 includes a hull 2 and an outboard motor 3. The outboard motor 3 is attached to the hull 2. The outboard motor 3 generates a thrust for causing the watercraft 100 to navigate. The outboard motor 3 includes an engine 4, a propeller 5, and an electric power generator 6. The engine 4 generates a driving force to rotate the propeller 5. The electric power generator 6 generates electric power by the driving force of the engine 4.

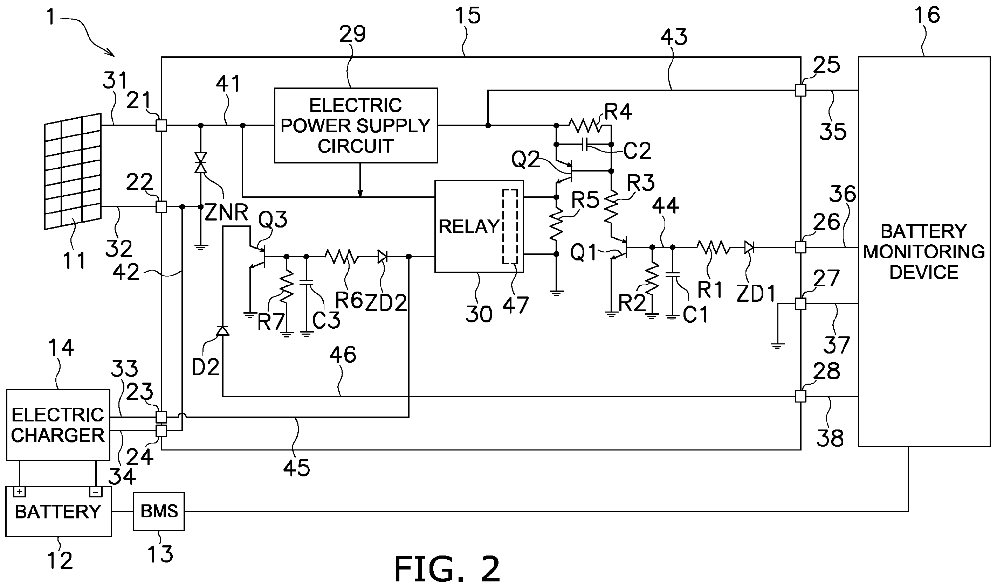

FIG. 2 is a diagram showing a configuration of the solar charging system 1. As shown in FIG. 2, the solar charging system 1 includes a solar panel 11, a battery 12, a battery management system (hereinafter referred to as "BMS") 13, an electric charger 14, a switching device 15, and a battery monitoring device 16. The solar panel 11 is attached to the watercraft 100. The solar panel 11 generates electric power by the sunlight.

The battery 12 is charged with the electric power generated by the solar panel 11. The battery 12 is, for instance, a secondary cell such as a lithium ion battery. The BMS 13 is connected to the battery 12. The BMS 13 detects the status of charging (SOC) of the battery 12. The electric charger 14 is connected to the battery 12. The electric charger 14 is connected to the solar panel 11 through the switching device 15. The electric charger 14 reduces the voltage of the electric power generated by the solar panel 11.

The switching device 15 is provided as a device discrete from the electric charger 14. The switching device 15 is connected to the electric charger 14 and the solar panel 11. The switching device 15 switches between whether or not to electrically charge the battery 12 in accordance with the status of the battery 12. When described in detail, the switching device 15 includes a positive polarity electric charging input terminal 21, a negative polarity electric charging input terminal 22, an electric charging output terminal 23, an electric charging ground terminal 24, an electric power supply output terminal 25, a control input terminal 26, a control ground terminal 27, an electric charging monitoring terminal 28, an electric power supply circuit 29, and a relay 30.

The positive polarity electric charging input terminal 21 and the negative polarity electric charging input terminal 22 are connected to the solar panel 11 through harnesses 31 and 32, respectively. The electric charging output terminal 23 and the electric charging ground terminal 24 are connected to the electric charger 14 through harnesses 33 and 34, respectively. The electric power supply output terminal 25, the control input terminal 26, the control ground terminal 27, and the electric charging monitoring terminal 28 are connected to the battery monitoring device 16 through harnesses 35 to 38, respectively.

The switching device 15 includes an electric charging input circuit 41 and an electric charging ground circuit 42. The positive polarity electric charging input terminal 21 is connected to the electric power supply circuit 29 and the relay 30 through the electric charging input circuit 41. The negative polarity electric charging input terminal 22 is connected to the electric charging ground terminal 24 through the electric charging ground circuit 42. The electric charging input circuit 41 is connected to the electric charging ground circuit 42 through a varistor ZNR.

The switching device 15 includes an electric power supply output circuit 43 and a switching control circuit 44. The electric power supply circuit 29 is connected to the electric power supply output terminal 25 through the electric power supply output circuit 43. The control input terminal 26 is connected to the electric power supply circuit 29 and the relay 30 through the switching control circuit 44. A Zener diode ZD1, resistors R1 to R5, capacitors C1 and C2, and transistors Q1 and Q2 are connected to the switching control circuit 44.

The switching device 15 includes an electric charging output circuit 45 and an electric charging monitoring circuit 46. The electric charging output terminal 23 is connected to the relay 30 through the electric charging output circuit 45. The electric charging monitoring terminal 28 is connected to the electric charging output circuit 45 through the electric charging monitoring circuit 46. AZener diode ZD2, resistors R6 and R7, a capacitor C3, a transistor Q3, and a diode D2 are connected to the electric charging monitoring circuit 46.

The electric power supply circuit 29 supplies electric power for driving the battery monitoring device 16 as driving electric power to the battery monitoring device 16 with the electric power generated by the solar panel 11 as generated electric power. The relay 30 is, for instance, a semiconductor relay such as an SSR (Solid State Relay). The relay 30 is switchable between on and off. When switched on, the relay 30 allows electric connection between the electric charging input circuit 41 and the electric charging output circuit 45. When switched off, the relay 30 shuts off the electric connection between the electric charging input circuit 41 and the electric charging output circuit 45. The relay 30 includes a drive circuit 47. When the drive circuit 47 is applied with voltage, the relay 30 is switched on. When the drive circuit 47 is not being applied with voltage, the relay 30 is switched off.

The battery monitoring device 16 is provided as a device discrete from the electric charger 14. The battery monitoring device 16 is provided as a device discrete from the switching device 15. As described above, the battery monitoring device 16 is connected through the harnesses 35 to 38 to the electric power supply output terminal 25, the control input terminal 26, the control ground terminal 27, and the electric charging monitoring terminal 28 in the switching device 15. Besides, the battery monitoring device 16 is connected to the BMS 13 through a communication network such as a CAN (Controller Area Network) in the watercraft 100. The battery monitoring device 16 monitors the status of the battery 12 and controls the switching device 15 in accordance with the status of the battery 12. Charging control executed for the battery 12 by the battery monitoring device 16 will be hereinafter explained.

When the solar panel 11 generates electric power by the sunlight, the generated electric power, outputted from the solar panel 11 to the electric charging input terminal 21, is inputted to the electric power supply circuit 29 through the electric charging input circuit 41. However, when the irradiation of the sunlight on the solar panel 11 is not effective and the voltage of the generated electric power outputted from the solar panel 11 is thereby less than a threshold, the electric power supply circuit 29 does not supply the driving electric power to the battery monitoring device 16 so as not to activate the battery monitoring device 16.

When the irradiation of the sunlight on the solar panel 11 is effective and the voltage of the generated electric power outputted from the solar panel 11 is thereby greater than or equal to the threshold, the electric power supply circuit 29 supplies the driving electric power to the battery monitoring device 16 through the electric power supply output circuit 43 and the electric power supply output terminal 25 so as to activate the battery monitoring device 16.

After being activated, the battery monitoring device 16 detects the voltage at the electric charging monitoring terminal 28. The battery monitoring device 16 determines whether or not the solar charging system 1 normally functions based on the voltage at the electric charging monitoring terminal 28. For example, the battery monitoring device 16 determines that the solar charging system 1 normally functions when the voltage at the electric charging monitoring terminal 28 is applied with Hi-Z (high impedance).

It should be noted that, when determining that the solar charging system 1 malfunctions, the battery monitoring device 16 stops the charging control for the battery 12. In this case, the battery monitoring device 16 may issue a warning. For example, the battery monitoring device 16 may turn on a warning lamp. Alternatively, the battery monitoring device 16 may cause a display in the watercraft 100 to show a warning screen.

When determining that the solar charging system 1 normally functions, the battery monitoring device 16 receives a signal, indicating whether electric charging is enabled or disabled for the battery 12, from the BMS 13. For example, when the battery 12 is excessively charged, the BMS 13 transmits a signal, indicating that electric charging is disabled for the battery 12, to the battery monitoring device 16.

When receiving a signal, indicating that electric charging is enabled for the battery 12, from the BMS 13, the battery monitoring device 16 switches on the relay 30 in the switching device 15. When described in detail, the battery monitoring device 16 applies Hi-voltage to the control input terminal 26. Accordingly, base current for the transistor Q1 in the switching control circuit 44 flows, whereby a collector and an emitter are electrically conducted in the transistor Q1. In accordance, base current for the transistor Q2 flows, whereby a collector and an emitter are electrically conducted in the transistor Q2. As a result, driving voltage is applied to the drive circuit 47 in the relay 30, whereby the relay 30 is switched on.

When the relay 30 is switched on, the generated electric power, outputted from the solar panel 11 to the charging input terminal 21, is outputted to the electric charging output terminal 23 through the electric charging input circuit 41 and the electric charging output circuit 45. Accordingly, the generated electric power outputted from the solar panel 11 is supplied to the battery 12 through the electric charger 14, whereby electric charging is started for the battery 12.

When electric charging is started for the battery 12, base current for the transistor Q3 in the electric charging monitoring circuit 46 flows, whereby a collector and an emitter are electrically conducted in the transistor Q3. The battery monitoring device 16 detects the voltage at the electric charging monitoring terminal 28. The battery monitoring device 16 determines whether the solar charging system 1 normally functions or malfunctions based on the voltage at the electric charging monitoring terminal 28. For example, when the voltage at the electric charging monitoring terminal 28 is applied with Hi-Z or Lo-Z (low impedance), the battery monitoring device 16 determines that the solar charging system 1 malfunctions.

When determining that the solar charging system 1 malfunctions, the battery monitoring device 16 switches off the relay 30. Likewise, when receiving a command for stopping electric charging from the BMS 13, the battery monitoring device 16 switches off the relay 30 as well. For example, when the battery 12 has been fully charged or has been malfunctioned, the BMS 13 transmits the command for stopping electric charging to the battery monitoring device 16. When determining that the solar charging system 1 malfunctions or when receiving the command for stopping electric charging from the BMS 13, the battery monitoring device 16 reduces voltage to be applied to the control input terminal 26 to Lo-voltage. Accordingly, the transistors Q1 and Q2 are switched off, whereby the relay 30 is switched off. Consequently, electric charging is stopped for the battery 12.

When the irradiation of the sunlight on the solar panel 11 becomes ineffective and the voltage of the generated electric power outputted from the solar panel 11 thereby becomes less than the threshold, the electric power supply circuit 29 does not supply the driving electric power to the battery monitoring device 16 so as to deactivate the battery monitoring device 16. Accordingly, the control input terminal 26 is not applied with voltage, whereby the relay 30 is switched off. While the relay 30 is being switched off, the generated electric power outputted from the solar panel 11 is not supplied to the electric charger 14; hence, electric charging is stopped for the battery 12. When the irradiation of the sunlight on the solar panel 11 becomes effective again, the switching device 15 and the battery monitoring device 16 execute again the series of processing described above, whereby electric charging is restarted for the battery 12.

In the solar charging system 1 according to the present embodiment explained above, the status of the battery 12 is monitored by the battery monitoring device 16; then, the switching device 15 is controlled to switch between whether or not to electrically charge the battery 12 in accordance with the status of the battery 12. Accordingly, excessive charging or degradation of the battery 12 is prevented. Besides, the switching device 15 is provided as a device discrete from the electric charger 14. Because of this, even when the electric charger 14 is of a low-cost type (e.g., a simple converter) without a function of controlling electric charging such as a function of controlling voltage or a function of controlling current, excessive charging or degradation of the battery 12 can be prevented.

One embodiment of the present invention has been explained above. However, the present invention is not limited to the embodiment described above and a variety of changes can be made without departing from the gist of the present invention.

The configuration of the outboard motor 3 is not limited to that in the embodiment described above and may be changed. For example, the outboard motor 3 may include an electric motor instead of the engine 4. The configuration of the solar charging system 1 is not limited to that in the embodiment described above and may be changed. For example, the circuit configuration of the switching device 15 is not limited to that in the embodiment described above and may be changed. The relay 30 is not limited to the SSR and may be another type of relay such as a mechanical relay.

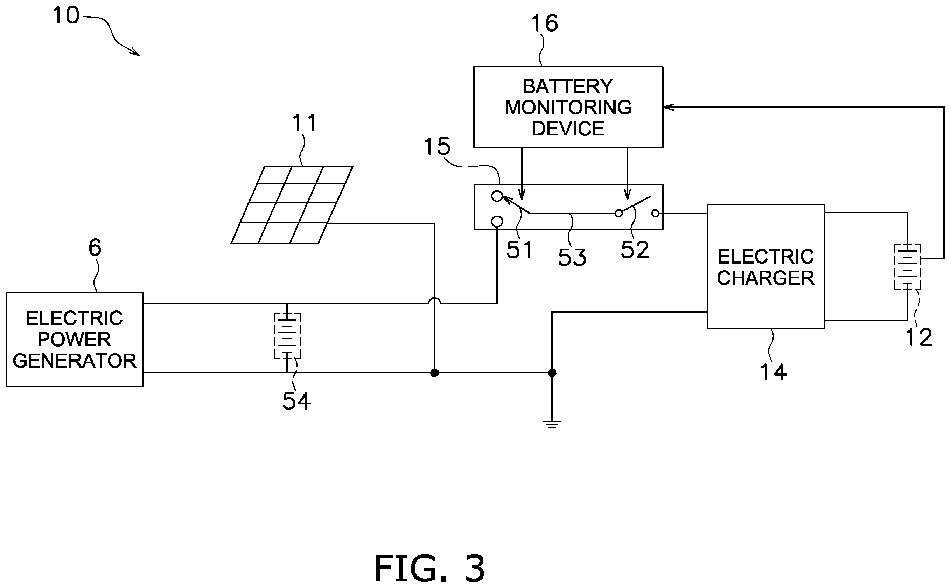

FIG. 3 is a diagram showing a configuration of a solar charging system 10 according to another embodiment. In the solar charging system 10 shown in FIG. 3, the electric charger 14 is connected to the solar panel 11 and the electric power generator 6 through the switching device 15. The switching device 15 includes a first relay 51, a second relay 52, and a connecting circuit 53. The first relay 51 is switchable between a first state and a second state. In the first state, the first relay 51 connects the connecting circuit 53 to the solar panel 11. In the second state, the first relay 51 connects the connecting circuit 53 to the electric power generator 6. The second relay 52 is switchable between an electric connection allowing state and an electric connection shutting-off state. In the electric connection allowing state, the second relay 52 allows electric connection of the connecting circuit 53 to the electric charger 14. In the electric connection shutting-off state, the second relay 52 shuts off electric connection of the connecting circuit 53 to the electric charger 14.

When determining that the battery 12 normally functions, the battery monitoring device 16 switches the second relay 52 into the electric connection allowing state. The battery monitoring device 16 selectively switches the first relay 51 into either the first state or the second state in accordance with the status of the solar panel 11 or that of the electric power generator 6. For example, when electric charging based on the solar panel 11 is enabled for the battery 12, the battery monitoring device 16 switches the first relay 51 into the first state. Accordingly, the solar panel 11 is connected to the electric charger 14 through the switching device 15, whereby the battery 12 is charged by the generated electric power outputted from the solar panel 11. In this case, a second battery 54, provided as a device discrete from the battery 12, may be charged by the generated electric power outputted from the electric power generator 6. It should be noted that the control for charging the battery 12 is herein executed in a comparable manner to that in the embodiment described above.

When electric charging is disabled for the solar panel 11, and simultaneously, when the electric power generator 6 is being driven, the battery monitoring device 16 switches the first relay 51 into the second state. Accordingly, the electric power generator 6 is connected to the electric charger 14 through the switching device 15, whereby the battery 12 is charged by the generated electric power outputted from the electric power generator 6. As described above, the electric charger 14 may selectively switch between electric charging for the battery 12 based on the solar panel 11 and that for the battery 12 based on the electric power generator 6.

Besides, when determining that the battery 12 malfunctions, the battery monitoring device 16 switches the second relay 52 into the electric connection shutting-off state. Accordingly, electric charging for the battery 12 based on the solar panel 11 and that for the battery 12 based on the electric power generator 6 are stopped.

### REFERENCE SIGNS LIST

3: Outboard motor, 6: Electric power generator, 11: Solar panel, 12: Battery, 14: Electric charger, 15: Switching device, 16: Battery monitoring device, 29: Power supply circuit

## Claims

1. A solar charging system for a watercraft (100) comprising:
a solar panel (11) attached to the watercraft (100);
a battery (12);
an electric charger (14) connected to the battery (12);
a switching device (15) provided as a device discrete from the electric charger (14), the switching device (15) connected to the electric charger (14) and the solar panel (11), the switching device (15) being configured to switch between whether or not to electrically charge the battery (12) in accordance with a status of the battery (12); and
a battery monitoring device (16) configured to monitor the status of the battery (12) and control the switching device (15) in accordance with the status of the battery (12).

2. The solar charging system according to claim 1, wherein the battery monitoring device (16) is provided as a device discrete from the electric charger (14).

3. The solar charging system according to claim 1 or 2, wherein the battery monitoring device (16) is provided as a device discrete from the switching device (15).

4. The solar charging system according to any of claims 1 to 3, wherein
the switching device (15) includes an electric power supply circuit (29), and
the electric power supply circuit (29) is configured to supply a driving electric power for driving the battery monitoring device to the battery monitoring device (16) with a generated electric power by the solar panel (11).

5. The solar charging system according to claim 4, wherein the electric power supply circuit (29) supplies the driving electric power to the battery monitoring device (16) so as to activate the battery monitoring device (16) when a voltage of the generated electric power generated by the solar panel (11) is greater than or equal to a threshold such that electric charging is enabled for the battery (12).

6. The solar charging system according to claim 4 or 5, wherein the electric power supply circuit (29) does not supply the driving electric power to the battery monitoring device (16) so as to deactivate the battery monitoring device (16) when the voltage of the generated electric power generated by the solar panel (11) is less than the threshold.

7. The solar charging system according to any of claims 1 to 6, further comprising:
an electric power generator (6), wherein
the electric charger (14) is connected to the solar panel (11) and the electric power generator (6) through the switching device (15).

8. The solar charging system according to claim 7, wherein the electric charger (14) selectively switches between electric charging for the battery (12) based on the solar panel (11) and electric charging for the battery (12) based on the electric power generator (6).

9. The solar charging system according to claim 7 or 8, further comprising:
an outboard motor (3) attached to the watercraft (100), wherein
the electric power generator (6) is installed in the outboard motor (3).
